# EUROPÄISCHE PATENTANMELDUNG

(11) **EP 3 324 476 A1**
(43) Veröffentlichungstag der Anmeldung: **23.05.2018**
(21) Anmeldenummer: 16002469.1
(22) Anmeldetag: 18.11.2016
(51) Int. Cl.: H01M 8/2465, H01M 8/248

(54) **BRENNSTOFFZELLENMODUL, BRENNSTOFFZELLENSYSTEM SOWIE BETRIEBSVERFAHREN**

(71) Anmelder: Siemens Aktiengesellschaft, 80333 München (DE)
(72) Erfinder: Beie, Hans-Jürgen, 90419 Nürnberg (DE); Brandt, Torsten, 91301 Forchheim (DE); Bärnreuther, Frank, 90419 Nürnberg (DE); Hammerschmidt, Albert, 91056 Erlangen (DE); Hoffmann, Joachim, 90559 Burgthann (DE); Mattejat, Arno, 91056 Erlangen (DE); Voitlein, ottmar, 91475 Lonnerstadt (DE)

(57) **Zusammenfassung**

Bei einem Brennstoffzellenmodul (1) umfassend eine Brennstoffzelleneinheit (2) und eine Betriebsmittel-Versorgungs-einheit (3) zur Versorgung der Brennstoffzelleneinheit (2) mit Betriebsmitteln, wobei die Brennstoffzelleneinheit (2) zumindest einen Stapel (5) von Brennstoffzellen (5'), vorzugsweise einen kaskadierten Stapel (5) von Brennstoffzellen (5'), aufweist, wobei die Betriebsmittel-Versorgungseinheit (3) Stromanschlüsse (10) zum Abgreifen eines in den Brennstoffzellen (5') erzeugten Stromes von außerhalb des Brennstoffzellenmoduls (2) und Betriebsmittelanechlüsse (13) zur Zu- und Abfuhr von Betriebsmitteln zu bzw. von dem Brennstoffzellenmodul (1) aufweist, wobei die Brennstoffzelleneinheit (2) und die Betriebsmittel-Versorgungseinheit (3) über eine zwischen den beiden Einheiten (2, 3) angeordnete Verbindungs-Platte (4) miteinander verbunden sind, wird die Verfügbarkeit erfindungsgemäß dadurch weiter verbessert, dass die Verbindungs-Platte (4) eine erste Teilplatte (4a) und eine zweite Teilplatte (4b) umfasst, die voneinander lösbar sind, um die Brennstoffzelleneinheit (2) von der BetriebsmittelVersorgungseinheit (3) zu trennen.

## Beschreibung

Die Erfindung betrifft ein Brennstoffzellenmodul umfassend eine Brennstoffzelleneinheit und eine Betriebsmittel-Versorgungseinheit zur Versorgung der Brennstoffzelleneinheit mit Betriebsmitteln gemäß Oberbegriff des Patentanspruchs 1. Ein derartiges Brennstoffzellenmodul ist beispielsweise aus der WO 03/030291 A2 bekannt.

Die Erfindung betrifft ferner ein Brennstoffzellensystem mit mehreren derartigen Brennstoffzellenmodulen gemäß Patentanspruch 14 sowie ein Betriebsverfahren gemäß Patentanspruch 15.

Modular aufgebaute Brennstoffzellensysteme kommen bereits in verschiedensten Anwendungen zum Einsatz. Ein sehr vorteilhafter Anwendungsfall liegt in der umweltfreundlichen und geräuschlosen elektrischen Energieerzeugung in maritimen Anwendungen, so beispielsweise an Bord von Schiffen, insbesondere Unterseebooten, oder unbemannten Unterwasserfahrzeugen.

Dabei kommen Brennstoffzellenmodule zum Einsatz, die üblicherweise eine elektrische Nennleistung von mindestens 5 kW aufweisen.

Derartige Brennstoffzellenmodule sind beispielsweise aus der WO 03/030291 A2, der WO 2005/073075 A1 sowie aus dem Prospekt der Siemens AG, Titel: "PEM Fuel Cells for Submarines", E10001-A930-A35-V3-7600, Siemens AG 2001, Deckblatt bekannt.

Die Brennstoffzellenmodule sind zur Versorgung mit Betriebsmitteln (z.B. Wasserstoff, Sauerstoff, Kühlwasser, Stickstoff) an eine gemeinsame Betriebsmittelversorgung angeschlossen (z.B. an jeweils einen gemeinsamen Speicher für Sauerstoff, Wasserstoff und Stickstoff). Üblicherweise sind die Brennstoffzellenmodule zur Erzielung eines gewünschten Ausgangsspannungsniveaus auch elektrisch in Reihe geschaltet. Alternativ können sie einzeln an einen DC/DC-Steller geschaltet sein.

Das Brennstoffzellenmodul weist eine Brennstoffzelleneinheit und eine Betriebsmittel-Versorgungseinheit zur Versorgung der Brennstoffzelleneinheit mit den Betriebsmitteln auf, wobei die Brennstoffzelleneinheit und die Betriebsmittel-Versorgungseinheit über eine zwischen den beiden Einheiten angeordnete Verbindungs-Platte miteinander verbunden sind.

Die Brennstoffzelleneinheit weist zusätzlich eine Endplatte auf, wobei zwischen der Verbindungs-Platte und der Endplatte zumindest ein Stapel von Brennstoffzellen sowie ein Stapel an Befeuchtungszellen angeordnet sind. Die Endplatte und die Verbindungsplatte sind mittels Zugankern miteinander verspannt und halten somit die Stapel zusammen. Vorzugsweise wird ein kaskadierter Brennstoffzellenstapel (d.h. mehrere medienseitig kaskadenartig hintereinandergeschaltete Teilstapel) für einen möglichst abgasfreien Betrieb des Brennstoffzellenmoduls verwendet.

Die Betriebsmittel-Versorgungseinheit ist ebenfalls mit der Verbindungs-Platte verbunden und weist eine Anschlussplatte mit Stromanschlüssen zum Abgreifen eines in den Brennstoffzellen erzeugten Stromes von außerhalb des Brennstoffzellenmoduls sowie Betriebsmittelanschlüsse zur Zu- und Abfuhr von Betriebsmitteln zu bzw. von dem Brennstoffzellenmodul auf.

Die Betriebsmittel-Versorgungseinheit umfasst Hilfskomponenten für den Betrieb des Brennstoffzellenmoduls, insbesondere Ventile zum Zuschalten und Wegschalten der (externen) Betriebsmittelversorgung, Drucksensoren, Temperatursensoren und/oder Wasserabscheider. Sensoren und Aktoren des Brennstaffzellenmoduls sind über entsprechende Signal- und Steuerleitungen mit einer entfernten Steuerungs- und Regelungseinrichtung verbunden.

Es ist dabei eine hohe Verfügbarkeit des Brennstoffzellensystems und somit auch der einzelnen Module sicherzustellen. Im Falle eines Defektes einer Brennstoffzelle wird bei den vorstehend beschriebenen Brennstoffzellenmodulen üblicherweise das gesamte Modul aus dem Brennstoffzellensystem ausgebaut und falls notwendig gegen ein intaktes Modul ausgetauscht. Hierzu wird - gesteuert durch die übergeordnete Steuerungs- und Regelungseinrichtung - das gesamte Brennstoffzellensystem, d.h. alle Brennstoffzellenmodule, mit einer Abschaltprozedur in einen sicheren Zustand gebracht. Nach Austausch des defekten Moduls wird das gesamte Brennstoffzellensystem mit einer Einschaltprozedur wieder in Betrieb genommen.

Es ist Aufgabe vorliegender Erfindung, die Verfügbarkeit des Brennstoffzellensystems bzw. der Brennstoffzellenmodule noch weiter zu erhöhen.

Die Lösung dieser Aufgabe gelingt durch ein Brennstoffzellenmodul gemäß Patentanspruch 1, ein Brennstoffzellensystem mit mehreren derartigen Brennstoffzellenmodulen gemäß Patentanspruch 14 sowie ein Betriebsverfahren für ein Brennstoffzellensystem gemäß Patentanspruch 15. Vorteilhafte Ausgestaltungen sind Gegenstand der jeweiligen Unteransprüche.

Bei einem erfindungsgemäßen Brennstoffzellenmodul umfasst die Verbindungs-Platte eine erste Teilplatte und eine zweite Teilplatte, die voneinander lösbar sind, um die Brennstoffzelleneinheit von der Betriebsmittel-Versorgungseinheit zu trennen.

Im Fall eines Defektes einer Brennstoffzelle kann somit die Brennstoffzelleneinheit von der Betriebsmittel-Versorgungseinheit entfernt und ausgetauscht werden. Die Betriebsmittel-Versorgungseinheit kann während des Austausches dagegen im Brennstoffzellensystem eingebaut verbleiben, Insbesondere müssen die Anschlüsse der Betriebsmittel-Versorgungseinheit an die Betriebsmittelversorgung des Brennstoffzellensystems sowie die Stromanschlüsse nicht getrennt werden. Hierdurch kann der Zeitbedarf und der Aufwand für eine Reparatur des Brennstoffzellenmoduls verringert und somit dessen Verfügbarkeit erhöht werden.

Gemäß einer konstruktiv sehr einfachen Ausgestaltung ist die Brennstoffzelleneinheit mit der zweiten Teilplatte verbunden und weist eine Endplatte auf, wobei zwischen der zweiten Teilplatte und der Endplatte der zumindest eine Stapel von Brennstoffzellen angeordnet ist und wobei die zweite Teilplatte und die Endplatte derart miteinander verspannt sind, dass sie den Stapel von Brennstoffzellen zusammenhalten.

Gemäß einer weiteren konstruktiv sehr einfachen Ausgestaltung ist die Betriebsmittel-Versorgungseinheit mit der ersten Teilplatte verbunden und umfasst eine Anschlussplatte, die die Betriebsmittelanschlüsse, vorzugsweise auch die Stromanschlüsse, aufweist.

Zur Befeuchtung der Betriebsgase vor deren Zufuhr zu den Brennstoffzellen kann zwischen der zweiten Teilplatte und der Endplatte ein Stapel von Befeuchtungszellen angeordnet sein, wobei die zweite Teilplatte und die Endplatte derart miteinander verspannt sind, dass sie gleichzeitig sowohl den Stapel von Brennstoffzellen als auch den Stapel von Befeuchtungszellen zusammenhalten.

Zur einfachen Anbindung von Ver- und Entsorgungskanälen der Brennstoffzellen und ggf. der Befeuchtungszellen der Brennstoffzelleneinheit an die Betriebsmittel-Versorgungseinheit verlaufen Betriebsmittelkanäle, vorzugsweise in Stapelrichtung der Brennstoffzellen, durch die beiden Teilplatten hindurch.

Gemäß einer weiteren besonders vorteilhaften Ausgestaltung umfasst das Brennstoffzellenmodul eine am oder im Brennstoffzellenmodul angeordnete Modulsteuerungs- und/oder -regelungseinrichtung. Hierdurch kann auf eine aufwendige Verkabelung zu einer übergeordneten eigene Modulsteuerungs- und/oder - regelungseinrichtung verzichtet werden und eine weitgehend autarke Steuerung und/oder Regelung des Brennstoffzellenmoduls unabhängig von einer übergeordneten Steuerungs- und/oder -regelungseinrichtung erfolgen.

Vorzugsweise ist die Modulsteuerungs- und/oder -regelungseinrichtung lösbar an der Brennstoffzelleneinheit oder der Betriebsmittel-Versorgungseinheit befestigt und über von der Betriebsmittel-Versorgungseinheit und der Brennstoffzelleneinheit lösbare Steuer- und/oder Signalleitungen mit darin angeordneten Aktoren bzw. Sensoren verbunden. Die Modulsteuerungs- und/oder -regelungseinrichtung kann somit im Falle eines Defektes ebenfalls leicht ausgetauscht werden.

Gemäß einer weiteren besonders vorteilhaften Ausgestaltung ist die Modulsteuerungs- und/oder -regelungseinrichtung ausgebildet, mittels einer Abschaltprozedur die Brennstoffzelleneinheit vor einem Trennen von der Betriebsmittel-Versorgungseinheit in einen sicheren Zustand zu bringen. Unter einem "sicheren" Zustand wird hierbei ein Zustand verstanden, bei dem zum einen an der Brennstoffzelleneinheit keine gefährliche Berührungsspannungen (z.B. Spannungen kleiner 120 Vdc) anliegen und zum anderen bei dem Betriebsmittelkonzentrationen einen vorgegebenen Grenzwert unterschreiten (z.B. Wasserstoffkonzentration kleiner als 4 Vol.%), so dass ein Trennen der Brennstoffzelleneinheit von der BetriebsmittelVersorgungseinheit und somit ein Kontakt der Brennstoffzellen zur Umgebungsluft dann nicht zur Ausbildung eines explosionsfähigen Brennstoff/Sauerstoff-Gemisches führt.

Die Abschaltprozedur umfasst hierzu vorteilhaft ein Entladen und ein Inertisieren der Brennstoffzellen. Unter "Inertisieren" wird hierbei ein (ggf. mehrmaliges) Evakuieren und Auffüllen der Casräume der Brennstoffzellen mit einem interten Gas, vorzugsweise Stickstoff, und/oder Spülen mit dem inerten Gas verstanden, bis die Brennstoffkonzentration einen vorgegebenen Grenzwert unterschreitet.

Das Brennstoffzellenmodul kann von Vorteil einen zuschaltbaren elektrischen Widerstand zur elektrischen Entladung der Brennstoffzelleneinheit als Bestandteil der Abschaltprozedur umfassen.

Gemäß einer weiteren besonders vorteilhaften Ausgestaltung ist die Modulsteuerungs- und/oder -regelungseinrichtung ausgebildet, mittels einer Einschaltprozedur die Brennstoffzelleneinheit nach einem Verbinden mit der Betriebsmittel-Versorgungseinheit in Betrieb zu nehmen. Unter "in Betrieb nehmen" wird hierbei verstanden, dass durch eine Betriebsmittelzufuhr zu der Brennstoffzelleneinheit eine kontrollierte elektrochemische Reaktion in den Brennstoffzellen in Gang gesetzt und eine Ausgangsspannung an der Brennstoffzelleneinheit erzeugt wird.

Vorzugsweise umfasst die Einschaltprozedur zumindest einen, vorzugsweise sämtliche, der folgenden Schritte:
- Prüfung eines ordnungsgemäßen Anschlusses von Sensoren und Aktoren an die Modulsteuerungs- und/oder - regelungseinrichtung,
- Prüfung eines ordnungsgemäßen Anschlusses von Stromleitern (z.3. Stromschienen) zur Führung des von der Brennstoffzelleneinheit erzeigten Stromes,
- Befüllen von Betriebsgasräumen der Brennstoffzelleneinheit mit einem inertem Gas, vorzugsweise Stickstoff, nach, vorzugsweise mehrfachem, Evakuieren und/oder Spülen mit inertem Gas, vorzugsweise Stickstoff,
- Prüfung der Dichtigkeit (vorzugsweise sowohl modulintern und nach extern),
- Befüllen von Betriebsgasräumen der Brennstoffzelleneinheit mit Betriebsgasen (Reaktanten),
- Überprüfen der elektrochemischen Reaktion, vorzugsweise anhand der Leerlaufspannungen.

Ein Verfahren zum Auffüllen der Betriebsmittelräume der Brennstoffzelleneinheit mit Betriebsmitteln ist beispielsweise in der noch unveröffentlichten europäischen Patentanmeldung Nr. 16163367.2 der Anmelderin beschrieben.

Zur genauen Überwachung der Brennstoffzellen umfasst das Brennstoffzellenmodul vorzugsweise auch eine Zellspannungsüberwachungseinrichtung, die lösbar an der Brennstoffzelleneinheit befestigt ist und über von der Brennstoffzelleneinheit lösbare Signalleitungen mit Brennstoffzellen der Brennstoffzelleneinheit verbunden ist. Die Zellspannungsüberwachungseinrichtung kann somit im Falle eines Defektes ebenfalls leicht ausgetauscht werden.

Weiterhin weist das Brennstoffzellenmodul vorzugsweise ein oder mehrere Bedienelemente zum Starten der Abschaltprozedur und/oder der Einschaltprozedur und ein oder mehrere Anzeigeelemente zur Anzeige eines erfolgreichen Abschlusses der Abschaltprozedur und/oder der Einschaltprozedur auf. Das Bedienelement kann beispielsweise ein Taster, ein Schalter oder ein Element eines berührungsempfindlichen Display (Touchscreen) sein. Das Anzeigeelement kann beispielsweise ein optischer oder ein akustischer Signalgeber oder ein Element eines Displays sein. Eine Person kann somit besonders einfach vor Ort an dem Brennstoffzellenmodul die Abschaltprozedur oder Einschaltprozedur starten und erhält eine Rückmeldung, ab wann er sicher die Brennstoffzelleneinheit von der Betriebsmittel-Versorgungseinheit trennen kann bzw. ab wann das Brennstoffzellenmodul nach einem Verbinden von Brennstoffzelleneinheit und Betriebsmittel-Versorgungseinheit wieder betriebsbereit ist.

Ein erfindungsgemäßes Brennstoffzellensystem umfasst mehrere vorstehend beschriebene Brennstoffzellenmodule, die zur Versorgung mit Betriebsmitteln an eine gemeinsame Betriebsmittelversorgung angeschlossen sind, wobei zum Austausch einer Brennstoffzelleneinheit eines Brennstoffzellenmoduls bei laufendem Betrieb des Brennstoffzellensystems durch Lösen der beiden Teilplatten die Brennstoffzelleneinheit von der Betriebsmittel-Versorgungseinheit trennbar ist, wobei aber die Betriebsmittel-Versorgungseinheit an dem Brennstoffzellensystem angeschlossen bleibt.

Bei einem erfindungsgemäßen Verfahren zum Betreiben eines vorstehend beschriebenen Brennstoffzellensystems mit mehreren Brennstoffzellenmodulen, die aus einer gemeinsamen Betriebsmittelversorgung mit Betriebsmitteln versorgt werden, wird zum Austausch einer Brennstoffzelleneinheit eines Brennstoffzellenmoduls bei laufendem Betrieb des Brennstoffzellensystems durch Lösen der beiden Teilplatten die Brennstoffzelleneinheit von der Betriebsmittel-Versorgungseinheit getrennt, wobei aber die Betriebsmittel-Versorgungseinheit an dem Brennstoffzellensystem angeschlossen bleibt.

Gemäß einer vorteilhaften Ausgestaltung des Verfahrens wird vor einem Trennen der Brennstoffzelleneinheit von der Betriebsmittel-Versorgungseinheit mittels der vorstehend erläuterten Abschaltprozedur die Brennstoffzelleneinheit in einen sicheren Zustand gebracht und der weitere sichere Betrieb des Brennstoffzellensystems gewährleistet.

Gemäß einer weiteren besonders vorteilhaften Ausgestaltung wird nach einem Verbinden einer Brennstoffzelleneinheit mit einer Betriebsmittel-Versorgungseinheit mittels der vorstehend erläuterten Einschaltprozedur die Brennstoffzelleneinheit wieder in Betrieb genommen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Darin zeigen:
- FIG 1: ein aus dem Stand der Technik bekanntes Brennstoffzellenmodul,
- FIG 2: ein aus dem Stand der Technik bekanntes Brennstoffzellensystem,
- FIG 3: ein erfindungsgemäßes Brennstoffzellenmodul in vereinfachter schematischer Darstellung in zusammengebautem Zustand,
- FIG 4: das Brennstoffzellenmodul von FIG 3 in getrenntem Zustand,
- FIG 5: eine Draufsicht auf die Modulsteuerungs- und/oder-regelungseinrichtung des Brennstoffzellenmoduls von FIG 3 und 4,
- FIG 6: ein erfindungsgemäßes Brennstoffzellensystem,
- FIG 7: eine erste perspektivische Ansicht eines erfindungsgemäßen Brennstoffzellenmoduls in Detaildarstellung,
- FIG 8: eine zweite perspektivische Ansicht des Brennstoffzellenmoduls von FIG 7,
- FIG 9: einen Verfahrensablauf bei einer Abschaltprozedur eines Brennstoffzellenmoduls,
- FIG 10: einen Verfahrensablauf bei einer Einschaltprozedur eines Brennstoffzellenmoduls.

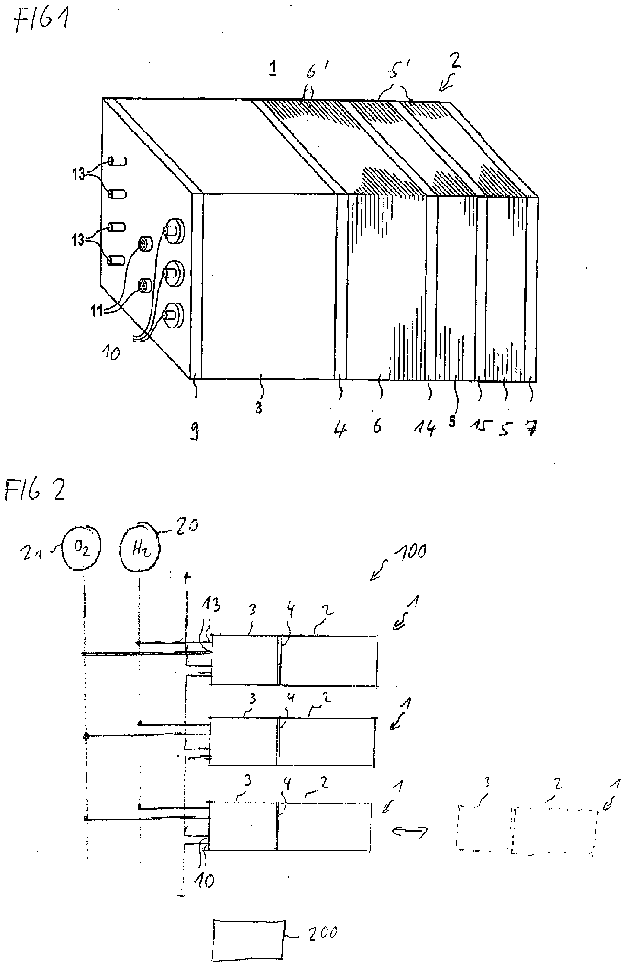

FIG 1 zeigt in vereinfachter schematischer Darstellung ein aus dem Stand der Technik bekanntes Brennstoffzellenmodul 1, das eine Brennstoffzelleneinheit 2 und eine Betriebsmittel-Versorgungseinheit 3 zur Versorgung der Brennstoffzelleneinheit 2 mit den Betriebsmitteln aufweist.

Die Brennstoffzelleneinheit 2 umfasst einen Stapel 5 von PEM (Polymer-Elektrolyt-Membran) Brennstoffzellen 5' und einen Stapel 6 von Befeuchtungszellen 6'. Der Stapel 5 ist kaskadiert und weist hierzu zwei Teilstapel mit einer Stabilisierungsplatte 15 auf,. Durch die Kaskadierung kann ein sehr abgasfreier Betrieb der Brennstoffzellen ermöglicht werden.

Die Brennstoffzelleneinheit 2 und die Betriebsmittel-Versorgungseinheit 3 sind über eine zwischen den beiden Einheiten angeordnete Verbindungs-Platte 4 miteinander verbunden.

Die Brennstoffzelleneinheit 2 weist zusätzlich eine Endplatte 7 auf, wobei zwischen der Verbindungs-Platte 2 und der Endplatte 7 die Stapel 5, 6 angeordnet sind. Die Endplatte 7 und die Verbindungsplatte 4 sind mittels nicht näher dargestellten Zugankern miteinander verspannt und halten somit die Stapel 5, 6 zusammen.

Die Betriebsmittel-Versorgungseinheit 3 ist ebenfalls mit der Verbindungs-Platte 4 verbunden und weist eine Anschlussplatte 9 mit Stromanschlüssen 10 zum Abgreifen eines in den Brennstoffzellen 5' erzeugten Stromes von außerhalb des Brennstoffzellenmoduls 1, Messfühleranschlüsse 11 sowie Betriebsmittelanschlüsse 13 zur Zu- und Abfuhr von Betriebsmitteln (Sauerstoff, Wasserstoff, Stickstoff) zu bzw. von dem Brennstoffzellenmodul 1 auf.

Eine weitere Zwischenplatte 14 begrenzen zusammen mit den Platten 4, 7 den Befeuchtungszellenstapel 6 bzw. den Brennstoffzellenstapel 5.

Die Platten 4, 14, 15 weisen eine Anzahl durch die Platten hindurch verlaufender in der Figur 1 nicht gezeigter Betriebsmittelkanäle auf. Die Platten 4, 7 schließen die Brennstoffzelleneinheit 2 nach außen ab.

Die Betriebsmittel-Versorgungseinheit 3 umfasst Hilfskomponenten für den Betrieb des Brennstoffzellenmoduls 1, insbesondere Ventile zum Zuschalten und Wegschalten der (externen) Betriebsmittelversorgung, Drucksensoren, Temperatursensoren und/oder Wasserabscheider.

Nicht näher gezeigte Sensoren und Aktoren des Brennstoffzellenmoduls 1 sind über entsprechende Anschlüsse in der Anschlussplatte 9 oder Endplatte 7 und Signal- und Steuerleitungen mit einer übergeordneten Steuerungs- und Regelungseinrichtung verbunden. Beispielhaft sind nur die Messfühleranschlüsse 13 dargestellt. Nicht dargestellt sind etwaige Stromschienen, die außen entlang der Brennstoffzelleneinheit 2 verlaufen und den von den Brennstoffzellen erzeugten Strom in die Betriebsmittel-Versorgungseinheit 3 führen.

FIG 2 zeigt ein Brennstoffzellensystem 100 mit mehreren Brennstoffzellenmodulen 1 gemäß FIG 1. Die Brennstoffzellenmodule 1 sind zur Betriebsmittelversorgung von außerhalb über die Anschlüsse 13 an eine gemeinsame Wasserstoffversorgung 20 und an eine gemeinsame Sauerstoffversorgung 21 angeschlossen. In ähnlicher Weise können sie beispielsweise auch an eine gemeinsame Stickstoffversorgung oder Kühlwasserversorgung angeschlossen sein. Eine übergeordnete Steuerungs- und/oder -regelungseinrichtung 200 dient zur Steuerung und/oder Regelung sämtlicher Brennstoffzellenmodule 1 und ist hierzu beispielsweise mit den Messfühlereingängen 11 (siehe FIG 1) verbunden.

Für eine Austausch einer defekten Brennstoffzelle 5' eines Brennstoffzellenmoduls 1 muss das gesamte Modul 1 mittels der Anschlüsse 10, 11, 13 von dem Brennstoffzellensystem 100 getrennt und ausgetauscht werden. Hierzu ist ein Abschalten und nachfolgendes Wiedereinschalten des gesamten Brennstoffzellensystems 100 notwendig. Auch für einen Wiedereinbau eines Brennstoffzellenmoduls 1 ist ein Abschalten und nachfolgendes Wiedereinschalten des gesamten Brennstoffzellensystems 100 notwendig.

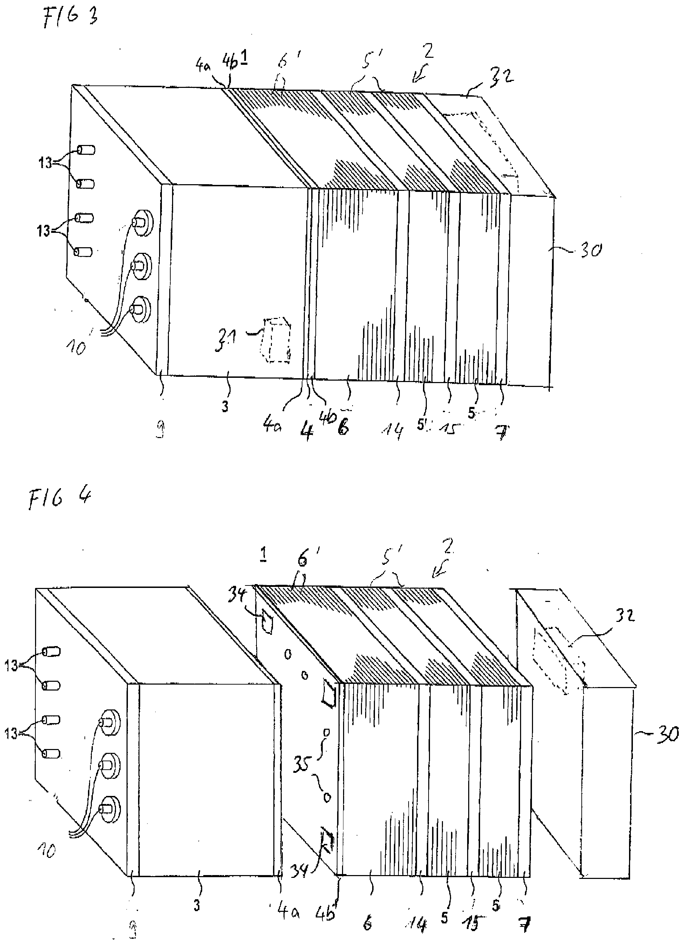

FIG 3 zeigt ein erfindungsgemäßes Brennstoffzellenmodul 1, wobei im Vergleich zu FIG 1 gleiche Komponenten mit den gleichen Bezugszeichen versehen sind. Im Unterschied zu dem Brennstoffzellenmodul 1 von FIG 1 umfasst die VerbindungsPlatte 4 eine erste Teilplatte 4a und eine zweite Teilplatte 4b, die voneinander lösbar sind, um die Brennstoffzelleneinheit 2 von der Betriebsmittel-Versorgungseinheit 3 zu trennen.

Die Brennstoffzelleneinheit 2 ist hierzu mit der zweiten Teilplatte 4b verbunden und die Stapel 5, 6 sind zwischen der zweiten Teilplatte und der Endplatte 7 angeordnet. Die zweite Teilplatte 4b und die Endplatte 7 sind derart miteinander verspannt, dass sie die Stapel 5, 6 zusammenhalten. Die Betriebsmittel-Versorgungseinheit 3 ist mit der ersten Teilplatte 4a verbunden.

Die Brennstoffzelleneinheit kann somit sehr einfach getauscht werden, wobei die Betriebsmittel-Versorgungseinheit 3 mit ihren Anschlüssen 10, 13 an dem Brennstoffzellensystem 100 angeschlossen bleiben kann.

Nicht dargestellt sind etwaige Stromschienen, die außen entlang der Brennstoffzelleneinheit 2 verlaufen und den von den Brennstoffzellen 5' erzeugten Strom in die Betriebsmittel-Versorgungseinheit 3 führen. Diese Stromschienen können beispielsweise über Steckverbindungen von Stromschienen in der Betriebsmittel-Versorgungseinheit 3 getrennt bzw. wieder mit diesen verbunden werden.

Nicht dargestellt sind auch Elemente zum lösbaren Verbinden der beiden Teilplatten 4a, 4b sowie eine Dichtung zwischen diesen beiden Teilplatten. Diese können beispielsweise aus Schraubverbindungen bestehen, die am Außenrand der Teilplatten 4a, 4b angeordnet sind. Hierzu notwendige Bohrungen können beispielsweise in einem Randbereich der Teilplatten 4a, 4b angeordnet sein, der über einen äußeren Rand der Brennstoffzellen 5' oder Befeuchtungszellen 6' übersteht.

Zur einfachen Anbindung von Ver- und Entsorgungskanälen der Brennstoffzellen 5' und der Befeuchtungszellen 6' der Brennstoffzelleneinheit 2 an die Betriebsmittel-Versorgungseinheit 3 verlaufen Betriebsmittelkanäle in nicht näher dargestellter Weise in Stapelrichtung der Zellen 5', 6', durch die beiden Teilplatten 4a, 4b hindurch.

Das Brennstoffzellenmodul 1 umfasst weiterhin eine eigene Modulsteuerungs- und/oder -regelungseinrichtung 30, die lösbar an der Brennstoffzelleneinheit 2 befestigt und über nicht näher dargestellte von der Betriebsmittel-Versorgungseinheit 3 und der Brennstoffzelleneinheit 2 lösbare Steuer- und/oder Signalleitungen mit darin angeordneten Aktoren bzw. Sensoren verbunden ist. Auch die Modulsteuerungs- und/oder -regeilungseinrichtung 30 kann somit im Falle eines Defektes leicht ausgetauscht werden. Die Modulsteuerungs- und/oder -regelungseinrichtung übernimmt dabei wesentliche Funktionen der übergeordneten Steuerungs- und/oder -regelungseinrichtung 200 von FIG 2, so dass auf Messfühlerausgänge in der Anschlussplatte 9 verzichtet werden kann.

Die Modulsteuerungs- und/oder -regelungseinrichtung 30 ist ausgebildet, mittels einer Abschaltprozedur die Brennstoffzelleneinheit 2 vor einem Trennen von der Betriebsmittel-Versorgungseinheit 3 in einen sicheren Zustand zu bringen und mittels einer Einschaltprozedur die Brennstoffzelleneinheit 2 nach einem Verbinden mit der Betriebsmittel-Versorgungseinheit 3 wieder in Betrieb zu nehmen.

Das Brennstoffzellenmodul 1 umfasst zur elektrischen Entladung der Brennstoffzelleneinheit 2 als Bestandteil der Abschaltprozedur einen zuschaltbaren elektrischen Widerstand 31.

Zur genauen Überwachung der Brennstoffzellen 5' umfasst das Brennstoffzellenmodul 1 weiterhin eine Zellspannungsüberwachungseinrichtung 32, die ebenfalls lösbar an der Brennstoffzelleneinheit 2 befestigt ist und über von der Brennstoffzelleneinheit 2 lösbare Signalleitungen mit Brennstoffzellen 5 der Brennstoffzelleneinheit 2 verbunden ist. Die Zellspannungsüberwachungseinrichtung 32 kann somit im Falle eines Defektes ebenfalls leicht ausgetauscht werden.

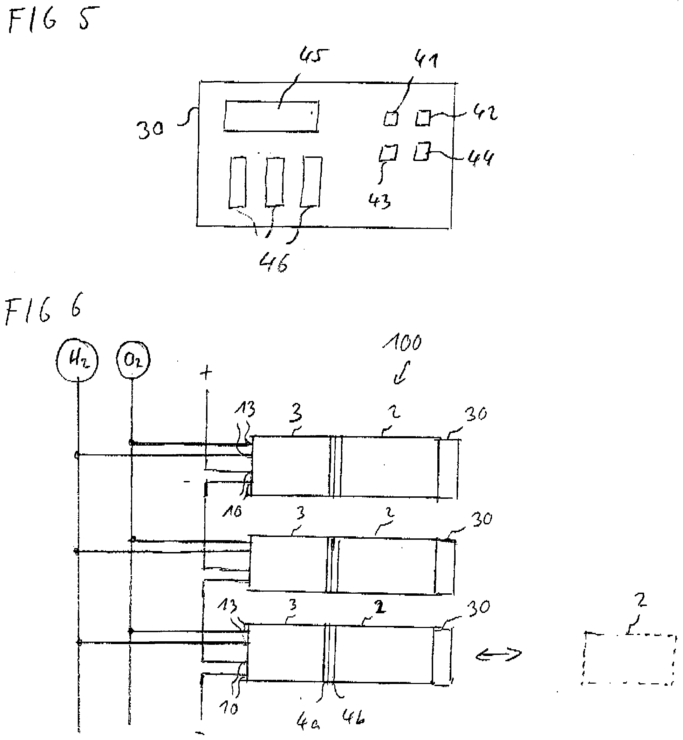

wie in einer Draufsicht auf die Modulsteuerungs- und/oder - regelungseinrichtung 30 in FIG 5 gezeigt ist, weist diese an ihrer Außenseite ein erstes Bedienelement 41 (z.B. einen Taster) zum Starten der Abschaltprozedur und ein zweites Bedienelement 42 (z.B. einen Taster) zum Starten der Einschaltprozedur auf. Zusätzlich weist sie ein erstes Anzeigeelement 43 (z.B. eine Signallampe) zur Anzeige eines erfolgreichen Abschlusses der Abschaltprozedur und ein zweites Anzeigeelement 44 (z.B eine Signallampe) zur Anzeige eines erfolgreichen Abschlusses der Einschaltprozedur auf.

Eine Person kann somit besonders einfach vor Ort an dem Brennstoffzellenmodul 1 die Abschaltprozedur oder Einschaltprozedur starten und erhält eine Rückmeldung, ab wann sie sicher die Brennstoffzelleneinheit 2 von der Betriebsmittel-Versorgungseinheit 3 trennen kann bzw. dass das Brennstoffzellenmodul 1 nach einem verbinden von Brennstoffzelleneinheit 2 und Betriebsmittel-Versorgungseinheit 3 wieder betriebsbereit ist.

Das Brennstoffzellenmodul 1 hat für maritime Anwendungen üblicherweise eine elektrische Nennleistung von mindestens 5 kW.

Anstatt eines kaskadierten Stapels 5 kann auch ein unkaskadierter Stapel vorhanden sein..

FIG 4 zeigt das Brennstoffzellenmodul 1 von FIG 3 in einem Zustand, in dem die Betriebsmittel-Versorgungseinheit 3, die Brennstoffzelleneinheit 2, die Modulsteuerungs- und/oder - regelungseinrichtung 30 und die Zellspannungsüberwachungseinrichtung 32 voneinander getrennt sind. Zu sehen sind auch durch die Teilplatten 4a, 4b, verlaufende Betriebsmittelkanäle 34. Zwischen den Teilplatten 4a, 4b können sich zur Abdichtung der Betriebsmittelkanäle 34 nicht näher dargestellte Dichtungen befinden. Weiterhin sind schematisch Zuganker 35 zur Verspannung der Teilplatte 4b mit der Endplatte 7 dargestellt.

FIG 5 zeigt eine Draufsicht auf die Außenseite der Modulsteuerungs- und/oder -regelungseinrichtung 30 mit den Bedienelementen 41, 42 und den Anzeigeelementen 43, 44. Zu sehen sind ferner ein Touchscreen 45 zur Anzeige von Statusinformationen sowie Steckverbinderanschlüsse 46 zum Anschluss von Steckverbindern für Signal- und Steuerleitungen sowie für eine Buskommunikation zu einer übergeordneten Steuerungs- und/oder Regelungseinrichtung.

wie anhand eines Brennstoffzellensystems 100 in FIG 6 dargestellt, kann somit bei einem Defekt einer Brennstoffzelle 5' die Brennstoffzelleneinheit 2 von der Betriebsmittel-Versorgungseinheit 3 getrennt und ausgetauscht werden, wobei die Betriebsmittel-Versorgungseinheit 3 weiterhin an das Brennstoffzellensystems 100 angeschlossen bleibt. Dies kann bei laufendem Betrieb des Brennstoffzellensystems 100 erfolgen. Ein Abschalten und nachfolgendes Neueinschalten des gesamten Brennstoffzellensystems 100 bei einem Austausch einer einzelnen Brennstoffzelleneinheit 2 ist nicht notwendig.

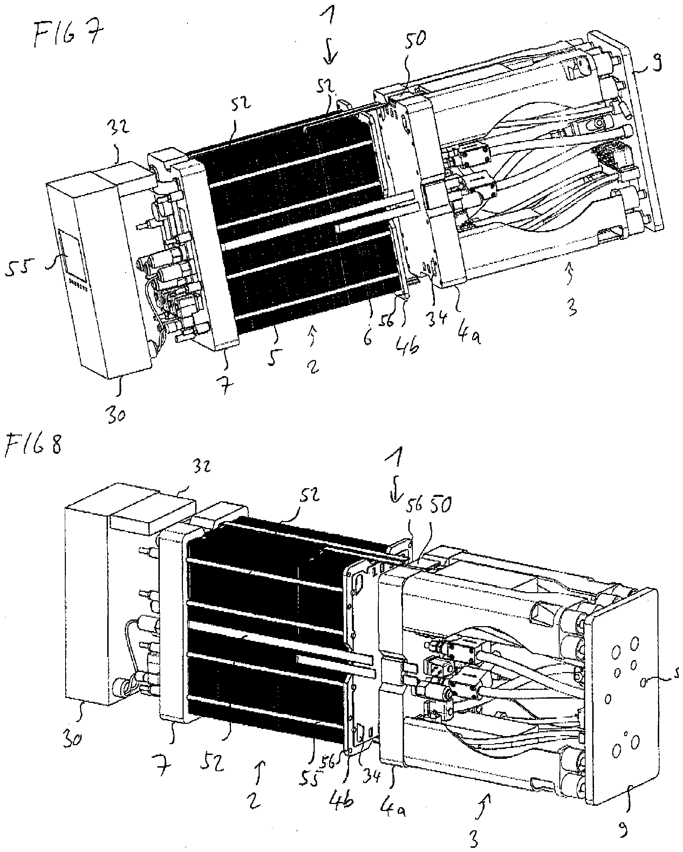

FIG 7 und 8 zeigen in zwei unterschiedlichen perspektivischen Ansichten ein erfindungsgemäßes Brennstoffzellenmodul 1 im getrennten Zustand in Detaildarstellung. Dabei sind im Vergleich zu dem Brennstoffzellenmodul 1 von FIG 3 bis FIG 5 einander entsprechende Komponenten mit gleichen Bezugszeichen versehen. Zur Vereinfachung der Darstellung sind von den Anschlüssen in der Anschlussplatte 9 nur Bohrungen 51 gezeigt.

Zu sehen sind zusätzlich entlang der Brennstoffzelleneinheit 2 verlaufende Stromschienen 52, die über Steckkupplungen 50 mit elektrischen Verbindungsleitungen in der Betriebsmittel-Versorgungseinheit 3 verbindbar bzw. von diesen lösbar sind. Die Modulsteuerungs- und/oder -regelungseinrichtung 30 weist anstatt separater Bedien- und Anzeigeelemente nun einen Touchscreen 55 auf. Weiterhin gezeigt sind Zuganker 55 zur Verspannung der Platten 4b und 7, um die Stapel 5 und 6 zusammenzuhalten.

Die beiden Teilplatten 4a, 4b können in den durch sie hindurch verlaufenden Betriebsmittelkanälen 34 auch Schnellkupplungen aufweisen.

Weiterhin sind am Außenrand der Teilplatten 4a, 4b angeordnete Bohrungen 56 für Schraubverbindungen zum lösbaren Verbinden der Brennstoffzelleneinheit 2 mit der Betriebsmittel-Versorgungseinheit 3 gezeigt.

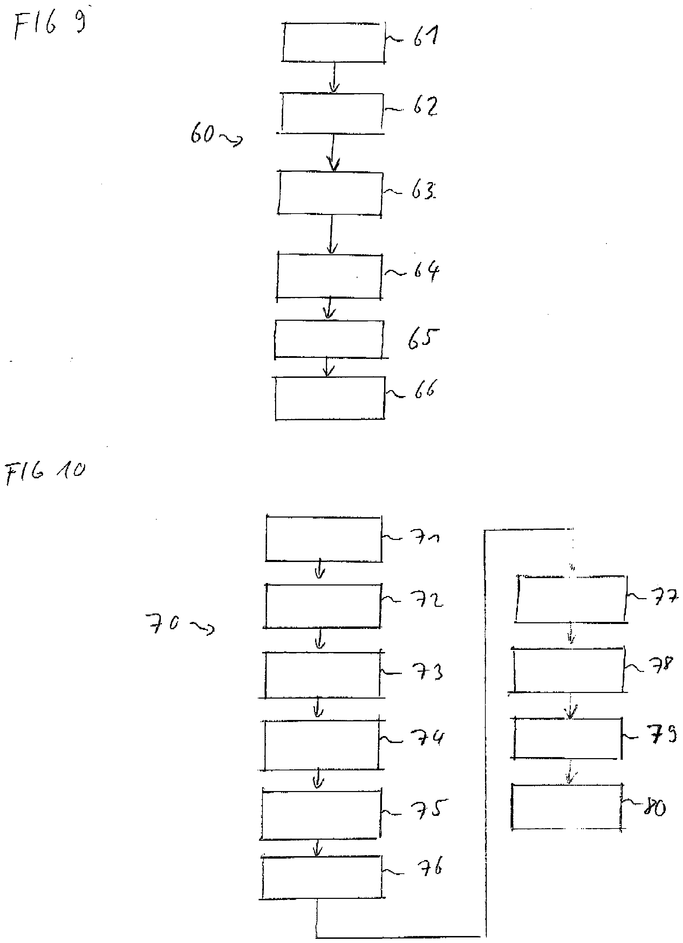

Anhand FIG 9 ist ein Verfahrensablauf 60 für eine Trennung einer Brennstoffzelleneinheit 2 von einer Betriebsmittel-Versorgungseinheit 3 veranschaulicht. Der Verfahrensablauf wird anhand der Ausführungsbeispiele von FIG 3 bis 6 erläutert.

Das Verfahren startet bei laufendem Betrieb des Brennstoffzellensystems 100 in einem Schritt 61 mit einem Abschaltbefehl durch eine Bedienperson, alternativ auch direkt durch die Modulsteuerungs- und/oder -regelungseinrichtung 30 oder die übergeordnete Steuerungs- und Regelungseinrichtung 200, mittels des Bedienelements 41. Dieser Abschaltbefehl wird von der Modulsteuerungs- und/oder -regelungseinrichtung 30 erfasst.

Durch die Modulsteuerungs- und/oder -regelungseinrichtung 30 wird dann automatisch eine Abschaltprozedur gestartet und durchlaufen. Hierzu trennt die Modulsteuerungs- und/oder - regelungseinrichtung 30 zuerst mittels eines Schalters in einem Schritt 62 die Brennstoffzellen 5' von den Stromanschlüssen 10 (und somit elektrisch von dem Brennstoffzellensystem 100) und schaltet den Brennstoffzellen 5' des abzuschaltenden Brennstoffzellenmoduls 1 nach einer Abschaltung der Reaktanten und Handhabung der Betriebsgasräume den Entladewiderstand 31 zu.

In einem nächsten Schritt 63 führt die Modulsteuerungs- und/oder -regelungseinrichtung 30 ein Inertisieren der Brennstoffzellen 5' durch. Dieses Inertisieren umfasst ein (ggf. mehrmaliges) Evakuieren und Auffüllen der Gasräume der Brennstoffzellen mit Stickstoff und/oder Spülen mit Stickstoff, bis die Wasserstoffkonzentration einen vorgegebenen Grenzwert unterschreitet.

Anschließend werden in einem Schritt 64 die Kühlmittelräume der Brennstoffzelleneinheit 2 entleert.

Einen erfolgreichen Abschluss der Abschlussprozedur signalisiert die Modulsteuerungs- und/oder -regelungseinrichtung 30 einer Bedienperson in einem Schritt 65 durch entsprechende Ansteuerung des Anzeigeelements 43.

Danach kann die Bedienperson in einem Schritt 66 die Modulsteuerungs- und/oder -regelungseinrichtung 30, die Brennstoffzelleneinheit 2 und die Betriebsmittel-Versorgungseinheit 3 voneinander trennen.

Anhand FIG 10 ist ein Verfahrensablauf 70 für eine Verbindung einer Brennstoffzelleneinheit 2 und einer Betriebsmittel-Versorgungseinheit 3 veranschaulicht. Der Verfahrensablauf wird ebenfalls anhand der Ausführungsbeispiele von FIG 3 bis 6 erläutert.

Das Verfahren startet bei laufendem Betrieb des Brennstoffzellensystems 100 in einem Schritt 71 mit einem mechanischen Verbinden der Brennstoffzelleneinheit 2 und der Betriebsmittel-Versorgungseinheit 3 durch eine Bedienperson. Außerdem wird die Modulsteuerungs- und/oder -regelungseinrichtung 30 elektrisch und mechanisch mit der Brennstoffzelleneinheit 2 und der Betriebsmittel-Versorgungseinheit 3 verbunden.

Anschließend erzeugt die Bedienperson in einem Schritt 72 durch Betätigen des Bedienelements 42 einen Einschaltbefehl. Dieser Einschaltbefehl wird von der Modulsteuerungs- und/oder -regelungseinrichtung 30 erfasst.

Durch die Modulsteuerungs- und/oder -regelungseinrichtung 30 wird dann automatisch eine Einschaltprozedur gestartet und durchlaufen.

Hierbei wird in einem ersten Schritt 73 der ordnungsgemäße Anschluss von Sensoren und Ventilen an die Modulsteuerungs- und/oder -regelungseinrichtung 30 geprüft.

In einem weiteren Schritt 74 wird eine ordnungsgemäße Verbindung von Stromleitern (z.B. Stromschienen) geprüft, die den von den Brennstoffzellen erzeugten Strom führen.

Dann werden in einem Schritt 75 die Kühlmittelräume der Brennstoffzelleneinheit 2 mit Kühlmittel (z.B. deionisiertem Wasser) befüllt, das dem Brennstoffzellenmodul 1 von extern (z.B. über eine Hilfseinrichtung wie in der noch unveröffentlichten europäischen Patentanmeldung Nr. 16163367.2 der Anmelderin oder direkt über eine Betriebsmittelversorgung des angeschlossenen Brennstoffzellensystems) der Betriebsmittel-Versorgungseinheit 3 zugeführt wird. Dies kann auch eine anschließende Entlüftung und/oder Entgasung der Kühlmittelräume umfassen.

Danach werden in einem Schritt 76 die Betriebsgasräume der Brennstoffzellen 5 mit Inertgas, Evakuieren und/oder Spülen geeignet vorbereitet, um in einem Schritt 77 eine Druckhalteprüfung/Dichtigkeitsprüfung bei unterschiedlichem Befüllungsgrad der Gasräume der Brennstoffzelleneinheit 2 durchzuführen (z.B. über eine Hilfseinrichtung wie in der noch unveröffentlichten europäischen Patentanmeldung Nr. 16163367.2 der Anmelderin oder direkt über eine Betriebsmittelversorgung des angeschlossenen Brennstoffzellensystems).

Anschließend können in einem Schritt 78 die Reaktanten zugeführt und die elektrochemische Reaktion, vorzugsweise anhand der Leerlaufspannungen, überprüft werden.

Einen erfolgreichen Abschluss der Einschaltprozedur signalisiert die Modulsteuerungs- und/oder -regelungseinrichtung 30 einer Bedienperson in einem Schritt 79 durch entsprechende Ansteuerung des Anzeigeelements 44.

Danach kann in einem Schritt 80 das Brennstoffzellenmodul 2 dem Brennstoffzellensystem 100 zugeschaltet werden.

## Patentansprüche

1. Brennstoffzellenmodul (1) umfassend eine Brennstoffzelleneinheit (2) und eine Betriebsmittel-Versorgungseinheit (3) zur Versorgung der Brennstoffzelleneinheit (2) mit Betriebsmitteln, wobei die Brennstoffzelleneinheit (2) zumindest einen Stapel (5) von Brennstoffzellen (5'), vorzugsweise einen kaskadierten Stapel (5) von Brennstoffzellen (5'), aufweist, wobei die Betriebsmittel-Versorgungseinheit (3) Stromanschlüsse (10) zum Abgreifen eines in den Brennstoffzellen (5') erzeugten Stromes von außerhalb des Brennstoffzellenmoduls (1) und Betriebsmittelanschlüsse (13) zur Zu- und Abfuhr von Betriebsmitteln zu bzw. von dem Brennstoffzellenmodul (2) aufweist, wobei die Brennstoffzelleneinheit (2) und die Betriebsmittel-Versorgungseinheit (3) über eine zwischen den beiden Einheiten angeordnete Verbindungs-Platte (4) miteinander verbunden sind,
**dadurch gekennzeichnet, dass** die Verbindungs-Platte (4) eine erste Teilplatte (4a) und eine zweite Teilplatte (4b) umfasst, die voneinander lösbar sind, um die Brennstoffzelleneinheit (2) von der Betriebsmittel-Versorgungseinheit (3) zu trennen.

2. Brennstoffzellenmodul (1) nach Anspruch 1, **dadurch gekennzeichnet, dass** die Brennstoffzelleneinheit (2) mit der zweiten Teilplatte (4b) verbunden ist und eine Endplatte (7) aufweist, wobei zwischen der zweiten Teilplatte (4) und der Endplatte (7) der zumindest eine Stapel (5) von Brennstoffzellen (5') angeordnet ist und wobei die zweite Teilplatte (4b) und die Endplatte (7) derart miteinander verspannt sind, dass sie den Stapel (5) von Brennstoffzellen (5') zusammenzuhalten.

3. Brennstoffzellenmodul (1) nach Anspruch 1 oder 2, **dadurch gekennzeichnet, dass** die Betriebsmittel-Versorgungseinheit (3) mit der ersten Teilplatten (4a) verbunden ist und eine Anschlussplatte (9) umfasst, die die Betriebsmittelanschlüsse (13), vorzugsweise auch die Stromanschlüsse, aufweist.

4. Brennstoffzellenmodul (1) nach einem der vorhergehenden Ansprüche 1 bis 3, **dadurch gekennzeichnet, dass** zwischen der zweiten Teilplatte (4b) und der Endplatte (7) ein Stapel (6) von Befeuchtungszellen (6') angeordnet ist, wobei die zweite Teilplatte (4b) und die Endplatte (7) derart miteinander verspannt sind, dass sie gleichzeitig sowohl den Stapel (5) von Brennstoffzellen (5') als auch den Stapel (6) von Befeuchtungszellen (6') zusammenhalten.

5. Brennstoffzellenmodul (1) nach einem der vorhergehenden Ansprüche 1 bis 4, **dadurch gekennzeichnet, dass** Betriebsmittelkanäle (34) durch die beiden Teilplatten (4a, 4b) hindurch verlaufen.

6. Brennstoffzellenmodul (1) nach einem der vorhergehenden Ansprüche 1 bis 5, **dadurch gekennzeichnet, dass** es eine am oder im Brennstoffzellenmodul (1) angeordnete Modulsteuerungs- und/oder -regelungseinrichtung (30) umfasst.

7. Brennstoffzellenmodul (1) nach Anspruch 6, **dadurch gekennzeichnet, dass** die Modulsteuerungs- und/oder -regelungseinrichtung (30) lösbar an der Brennstoffzelleneinheit (2) oder der Betriebsmittel-Versorgungseinheit (3) befestigt ist und über von der Betriebsmittel-Versorgungseinheit (3) und der Brennstoffzelleneinheit (2) lösbare Steuer- und/oder Signalleitungen mit darin angeordneten Aktoren bzw. Sensoren verbunden ist.

8. Brennstoffzellenmodul (1) nach einem der Ansprüche 6 bis 7, **dadurch gekennzeichnet, dass** die Modulsteuerungs- und/oder -regelungseinrichtung (30) ausgebildet ist, mittels einer Abschaltprozedur die Brennstoffzelleneinheit (2) vor einem Trennen von der Betriebsmittel-Versorgungseinheit (3) in einen sicheren Zustand zu bringen.

9. Brennstoffzellenmodul (1) nach Anspruch 8, **dadurch gekennzeichnet, dass** die Abschaltprozedur ein Entladen und ein Inertisieren der Brennstoffzellen (5') umfasst.

10. Brennstoffzellenmodul (1) nach einem der vorhergehenden Ansprüche 8 bis 9, **dadurch gekennzeichnet, dass** es einen zuschaltbaren elektrischen Widerstand (31) zur elektrischen Entladung der Brennstoffzelleneinheit (2) umfasst.

11. Brennstoffzellenmodul (1) nach einem der vorhergehenden Ansprüche 6 bis 10, **dadurch gekennzeichnet, dass** die Modulsteuerungs- und/oder -regelungseinrichtung (30) ausgebildet ist, mittels einer Einschaltprozedur die Brennstoffzelleneinheit (2) nach einem Verbinden mit der Betriebsmittel-Versorgungseinheit (3) in Betrieb zu nehmen.

12. Brennstoffzellenmodul (1) nach Anspruch 11, **dadurch gekennzeichnet, dass** die Einschaltprozedur zumindest einen, vorzugsweise sämtliche, der folgenden Schritte umfasst:
- Prüfung eines ordnungsgemäßen Anschlusses von Sensoren und Aktoren an die Modulsteuerungs- und/oder -regelungseinrichtung (30),
- Prüfung eines ordnungsgemäßen Anschlusses von Stromleitern (52) zur Führung eines von der Brennstoffzelleneinheit (2) erzeugten Stromes.
- Befüllen von Kühlmittelräumen der Brennstoffzelleneinheit (2) mit Kühlmittel,
- Befüllen von Betriebsgasräumen der Brennstoffzelleneinheit (2) mit einem Inertgas,
- Prüfung der Dichtigkeit und
- Befüllen von Betriebgasräumen der Brennstoffzelleneinheit (2) mit Betriebgasen
- Überprüfen der elektrochemischen Reaktion, vorzugsweise anhand der Leerlaufspannungen.

13. Brennstoffzellenmodul (1) nach einem der vorhergehenden Ansprüche 1 bis 12, **dadurch gekennzeichnet, dass** es ein oder mehrere Bedienelemente (41, 42) zum Starten der Abschaltprozedur und/oder der Einschaltprozedur und ein oder mehrere Anzeigeelemente (43, 44) zur Anzeige eines erfolgreichen Abschlusses der Abschaltprozedur und/oder der Einschaltprozedur aufweist.

14. Brennstoffzellensystem (100) mit mehreren Brennstoffzellenmodulen (1) nach einem der vorhergehenden Ansprüche, die zur Versorgung mit Betriebsmitteln an eine gemeinsame Betriebsmittelversorgung (20, 21) angeschlossen sind, wobei zum Austausch einer Brennstoffzelleneinheit (2) eines Brennstoffzellenmoduls (1) bei laufendem Betrieb des Brennstoffzellensystems (100) durch Lösen der beiden Teilplatten (4a, 4b) die Brennstoffzelleneinheit (2) von der Betriebsmittel-Versorgungseinheit (3) trennbar ist, wobei die Betriebsmittel-Versorgungseinheit (3) an dem Brennstoffzellensystem angeschlossen bleibt.

15. Verfahren zum Betreiben eines Brennstoffzellensystem (100) mit mehreren Brennstoffzellenmodulen (1) nach einem der Ansprüche 1 bis 13, die aus einer gemeinsamen Betriebsmittelversorgung (20, 21) mit Betriebsmitteln versorgt werden, wobei zum Austausch einer Brennstoffzelleneinheit (2) eines Brennstoffzellenmoduls (1) bei laufendem Betrieb des Brennstoffzellensystems (100) durch Lösen der beiden Teilplatten (4a, 4b) die Brennstoffzelleneinheit (2) von der Betriebsmittel-Versorgungseinheit (3) getrennt wird, wobei die Betriebsmittel-Versorgungseinheit (3) an dem Brennstoffzellensystem (100) angeschlossen bleibt.
